# EUROPÄISCHE PATENTANMELDUNG

(11) **EP 1 764 320 A1**
(43) Veröffentlichungstag der Anmeldung: **21.03.2007**
(21) Anmeldenummer: 05020122.7
(22) Anmeldetag: 15.09.2005
(51) Int. Cl.: B65G 53/20

(54) **Förderrohr zur vereinfachten pneumatischen Förderung**

(71) Anmelder: Claudius Peters Technologies GmbH, 21614 Buxtehude (DE)
(72) Erfinder: Hilgraf, Peter, 22419 HAMBURG (DE); Frühling, Rainer, 21035 HAMBURG (DE)
(74) Vertreter: Glawe, Delfs, Moll

(57) **Zusammenfassung**

Pneumatisches Förderrohr zum Transportieren von Schüttgut mit einem rohrförmigen Gehäuse (1), das durch einen Zwischenboden (21') in einen oberen Förderraum (19) und einen unteren Gasraum (29) geteilt ist, wobei der Zwischenboden (21') mittels entlang seiner Seitenwände laufende Befestigungselemente abgedichtet ist. Erfindungsgemäß ist vorgesehen, dass der nach oben durch den Zwischenboden (21') begrenzte Gasraum (29) zur Seite und nach unten hin über eine starre Schale (22') begrenzt ist, mit deren Rändern die Befestigungselemente für den Zwischenboden (21') verbunden sind. Damit kann ein pneumatisches Förderrohr auf einfache Weise mit wenig Aufwand hergestellt werden. Die Verwendung von Metall für sämtliche Materialien einschließlich Dichtkomponenten ist möglich. Damit kann der Betriebsbereich auf höhere Temperaturen erweitert werden. Zudem eignet sich die erfindungsgemäße Lösung auch zur Nachrüstung von bestehenden Rohren.

## Beschreibung

Die Erfindung betrifft ein pneumatisches Förderrohr zum Transportieren von Schüttgut mit einem rohrförmigen Gehäuse, das durch einen Zwischenboden in einen oberen Förderraum und einen unteren Gasraum geteilt ist, wobei Dichtleisten zur dichtenden Befestigung der Seitenränder des Zwischenbodens vorgesehen sind.

Zum leitungsgebundenen Transport von Schüttgütern, insbesondere körnigem oder staubförmigem Schüttgut, werden vielfach pneumatische Fördervorrichtungen verwendet. Sie ermöglichen einen einfachen, energiegünstigen und bei geschlossener Ausführung auch staubfreien Transport des Schüttguts. Grundsätzlich unterscheidet man hier zwischen zwei verschiedene Grundbauarten, nämlich die Luftförderrinne einerseits und das pneumatische Förderrohr andererseits. Die Luftförderrinne kann offen oder geschlossen ausgeführt sein. Sie weist entlang ihrer Länge im unteren Bereich einen Belüftungsboden auf. Durch diesen wird Druckgas im Betrieb zugeführt, welches das Schüttgut durchströmt. Dabei wird die Grenzschicht zwischen Schüttgut und Belüftungsboden aufgelockert, wodurch das Schüttgut nicht mehr aufliegt, sondern wie eine Flüssigkeit nahezu reibungsfrei verschieblich ist. Die Treibkraft für den Transport des derart fluidisierten Schüttguts resultiert aus der Anordnung in einem leichten Gefälle. Die Luftförderrinne ist daher nur zu einem Transport des Guts in Abwärtsrichtung geeignet. - Die andere Grundbauart ist das pneumatische Förderrohr. Hier ist der Unterschied zur Förderrinne kein Gefälle in Förderrichtung erforderlich, sondern der Transport des Schüttguts erfolgt in der Regel durch Druck oder Sog längs des Förderrohrs. Dazu kann am Anfang des Förderrohrs ein Überdruck aufgebracht werden, oder es wird dementsprechend am Ende des Förderrohrs mit einem Unterdruck gesaugt. Diese Bauart hat den Vorteil, dass sie lageunabhängig ist. Eine Fluidisierung ist bei dieser Bauart nicht unbedingt entlang der gesamten Rohrlänge erforderlich, sondern es genügt in der Regel eine abschnittsweise Anordnung der Belüftungsböden (WO-A-03/026991).

Im Stand der Technik sind verschiedene Einrichtungen bekannt geworden, mittels derer das Druckgas zum Fluidisieren in ein Förderrohr eingebracht werden kann. Aus der DE-A-15 56 091 ist es bekannt, in einem Förderrohr eine starre Platte als Zwischenboden einzusetzen. Die Platte bildet im Querschnitt gesehen eine Sekante in dem kreisförmigen Förderrohr. Zur Befestigung sind seitliche Leisten vorgesehen, die innen an der Wandung des Rohrs befestigt sind. Ein Nachteil dieser Anordnung besteht darin, dass die vorgesehene Platte verhältnismäßig dick und damit schwierig zu montieren ist. Weiter ist die Befestigung bzw. Abdichtung über die seitlichen Leisten auf Grund ihrer Befestigung an der Innenwandung des Rohrs bei längeren Rohrabschnitten nur schwer oder gar nicht möglich. - Aus der DE-A-20 54 912 ist eine pneumatische Förderrinne bekannt, die ebenfalls eine sekantenartig eingesetzte Platte als Zwischenboden aufweist. Zur seitlichen Abdichtung und zur Befestigung sind entlang der Seitenränder Gummileisten vorgesehen, die mit komplementären Metallhalteklammern zusammenwirken. Auch bei dieser Konstruktionsart gestaltet sich die Montage bei längeren Rohrabschnitten schwierig. Zwar sorgt das Gummi hier für eine bessere Abdichtung, jedoch geschieht dies um den Preis einer geringen Temperaturbeständigkeit. Die Temperatur des zu transportierenden Schüttguts ist damit auf Bereiche bis höchstens 100°C beschränkt. Aus der DE-A-20 18 742 ist eine pneumatische Förderrinne bekannt, in die ein im Querschnitt D-förmiges Schlauchgebilde eingesetzt ist. Es weist eine poröse Oberseite auf, die als Zwischenboden fungiert. Der Vorteil dieser Anordnung besteht darin, dass durch den in Umfangrichtung geschlossenen Schlauchkörper die Abdichtung des Zwischenbodens zur Seite hin unproblematisch ist. Ein Nachteil besteht darin, dass das Schlauchmaterial verschleißanfällig ist. Diese Bauweise ist daher recht wartungsaufwendig. Zwar kann die Oberseite als eine gesinterte Platte ausgeführt sein, jedoch erhöht sich damit der Herstellungsaufwand, zudem stellt sich bei Integration der porösen Platte in das Schlauchmaterial wiederum das Problem der Gewährleistung einer ausreichenden Dichtigkeit. Außerdem ist die Zuführung des Fluidisiergases in den Schlauch schwierig. Sie kann zwar über seine Stirnseiten erfolgen, jedoch ergibt sich dann eine unterschiedliche Druckverteilung längs des Förderrohrs. Erfolgt die Zuführung des Fluidisiergases abschnittsweise von unten durch das Förderrohr hindurch, so müssen an dem Schlauchmaterial entsprechende Anschlussstutzen ausgebildet sein. Auf Grund unvermeidlicher Kriech- und Wanderungsbewegung des Schlauchs besteht die Gefahr eines Abreißens der Stutzen, insbesondere an den scharfen Kanten der Öffnungen in dem Förderrohr. Insgesamt kann die Schlauchlösung damit bei den in der Praxis vorkommenden rauhen Einsatzbedingungen nicht befriedigen. Diese Bauweise hat sich in der Praxis daher nicht durchgesetzt.

Der Erfindung liegt die Aufgabe zu Grunde, ausgehend von dem zuerst genannten Stand der Technik ein pneumatisches Förderrohr der eingangs genannten Art dahingehend zu verbessern, dass es einfacher zu montieren ist und eine größere Betriebssicherheit aufweist.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einem pneumatischen Förderrohr zum Transportieren von Schüttgut mit einem rohrförmigen Gehäuse, das durch einen Zwischenboden in einen oberen Förderraum und einen unteren Gasraum geteilt ist, wobei der Zwischenboden über entlang seinen Seitenrändern laufende Befestigungselemente abgedichtet ist, weiter vorgesehen, dass der nach oben durch den Zwischenboden begrenzte Gasraum zur Seite und nach unten hin über eine starre Schale begrenzt ist, mit deren Rändern die Befestigungselemente für den Zwischenboden verbunden sind.

Kern der Erfindung ist der Gedanke, mit einer starren Schale ein inneres Gehäuse zu schaffen, das den Gasraum begrenzt und das zugleich einen Befestigungsrahmen für den Zwischenboden bildet. Es ist damit ein autarkes inneres Gehäuse für den Gasraum geschaffen, das in sich dicht ist und keine abzudichtenden Übergänge zur Innenwandung des Förderrohrs benötigt. Die Montage kann damit auf äußerst einfache Weise erfolgen. Es ist lediglich erforderlich, die Schale mit dem Zwischenboden als inneres Gehäuse in das Förderrohr einzuschieben. Das Herstellen einer Befestigung bzw. seitlichen Abdichtung zur Innenwandung des Rohrs entfällt.

Die Erfindung ermöglicht damit eine Modulbauweise, die es erlaubt, mittels vorgefertigter Komponenten aus einem herkömmlichen Leitungsrohr ein pneumatisches Förderrohr zu bilden. Es können also übliche Rohre verwendet werden. Diese sind nicht nur kostengünstig, sondern haben weiter den Vorteil einer einfachen Nachrüstbarkeit. Es können bestehende Rohranlagen mit dem erfindungsgemäßen Innengehäuse leicht nachgerüstet werden. Dies braucht nicht entlang der gesamten Förderstrecke zu geschehen, sondern es genügt in vielen Fällen, an bestimmten kritischen Punkten ein solches Innengehäuse vorzusehen, um damit eine Fluidisierung zu erreichen. Außer der einfachen Montage und Nachrüstbarkeit kann die Erfindung einen weiteren Vorteil für sich buchen, nämlich dass mit der erfindungsgemäßen starren Schale eine Ausführung der Schale wie auch des Zwischenbodens aus Metall ermöglicht ist, ohne dass gesonderte Dichtelemente aus empfindlichen Materialien, wie Gummi oder Schlauchgewebe, erforderlich sind. Die Ausführung aus Metall bietet den Vorteil hoher Verschleiß- und Temperaturfestigkeit.

Der Zwischenboden kann als starre Platte ausgeführt sein, mit Vorteil kann aber auch vorgesehen sein, ihn aus einem Gewebematerial auszubilden. Ist das Gewebe zwischen den Rändern der Schale gespannt, so ergibt dies einen sehr kostengünstigen und gute Gasdurchlässigkeit aufweisenden Zwischenboden. Der Begriff plattenartig im Sinne dieser Erfindung ist daher so zu verstehen, dass er nicht nur eine massive Struktur, sondern auch ein Gewebe umfasst. Das Gewebe kann bspw. ein Rinnengewebe oder ein Metallgewebe sein. Drahtgewebe, insbesondere solches aus Metall, bieten den Vorteil, dass es einfach und günstig herzustellen sind und eine hohe Temperatur- und Verschleißfestigkeit aufweist. Es ist zweckmäßig, zumindest an zwei gegenüberliegenden Rändern der Schale einen Spannrahmen für das Metallgewebe vorzusehen. Damit kann das Gewebe formstabil gehaltert werden. Der Gefahr, dass sich Einsenkungen im Gewebe bilden, in denen sich ruhendes Schüttgut ansammelt, wodurch die Durchlasseigenschaft negativ beeinflusst würde, kann damit entgegengewirkt werden. Besonders zweckmäßig ist es hierbei, wenn in den Spannrahmen Dichtleisten integriert sind. Dies ermöglicht eine besonders einfache Montage des Gewebes als Zwischenboden.

Die Form der Schale ist vorzugsweise derart gewählt, dass sie komplementär zur Innenkontur des Förderrohrs ist. Damit ergibt sich ein guter Formschluss zwischen der Schale und dem Rohr. Hohlräume, in denen sich Schüttgut in ungewünschter Weise ansammeln könnte, werden auf diese Weise vermieden. Dies soll aber nicht ausschließen, dass die Schale aus mehreren winklig zusammengefügten Boden und Seitenplatten gebildet ist. Damit kann eine wannenartige Struktur geschaffen werden, die auf konstruktiv einfache Weise einen hervorragenden Kompromiss zwischen günstiger Herstellung einerseits und Anpassung an die Innenkontur des Förderrohrs andererseits bildet.

Vorzugsweise ist weiter vorgesehen, dass an einer dem Zwischenboden gegenüberliegenden Seite der Schale mindestens ein Stutzen zur Druckgaszufuhr ausgebildet ist, der durch eine Öffnung im Förderrohr nach außen geführt ist. Über diesen Stutzen kann das zum Fluidisieren benötigte Druckgas zugeführt werden. Die Anordnung des gegenüberliegenden Zwischenbodens ermöglicht es, den Stutzen in Längsrichtung des Förderrohrs gesehen mittig anzuordnen oder gar mehrere Stutzen vorzusehen. Damit lässt sich eine gleichmäßigere Druckverteilung des Fluidisiergases in dem Gasraum erreichen. Eine gleichmäßigere Druckverteilung ist günstig für eine gut kontrollierbare Fluidisierung. Die Anordnung hat ferner den Vorteil der leichten Nachrüstbarkeit. Es braucht lediglich in ein konventionelles, vorhandenes Rohr eine ausreichend große Öffnung am Boden eingebracht zu werden. Durch diese wird dann der Stutzen entweder von innen beim Einsetzen der Schale geschoben, oder es kann auch vorgesehen sein, ihn von außen in die Schale einzuführen und mit dieser zu verbinden (bspw. mittels eines Gewindes). Zur Abdichtung ist hierbei zweckmäßigerweise vorgesehen, dass auf dem Stutzen ein elastisches Element aufgesetzt ist. Dessen Außendurchmesser ist zweckmäßigerweise derart auf die Weite der Öffnung in dem Förderrohr abgestimmt, dass sich einerseits eine Abdichtung und andererseits eine sichere Halterung der Schale in ihrer Position ergibt.

Gemäß einem weiteren Aspekt, der ggf. unabhängigen Schutz verdient, eignet sich die Erfindung auch zur Nachrüstung von bestehenden Förderrohren, um eine Fluidisierung des zu transportierenden Schüttguts zu ermöglichen. Danach ist insbesondere ein Nachrüstsatz für pneumatische Förderung zum Transportieren von Schüttgut mit einem Innengehäuse zum Einbringen in ein rohrförmiges Gehäuse des Förderrohrs vorgesehen, das durch einen Zwischenboden in einen oberen Förderraum und in einen unteren Gasraum geteilt ist, wobei das Innengehäuse als eine starre Schale ausgebildet ist, die nach oben hin durch den Zwischenboden bedeckt ist, der über Befestigungselemente mit den Rändern der starren Schale verbunden ist. Dieser Nachrüstsatz eignet sich besonders zur Nachrüstung von bestehenden Förderrohren, da keine umständlichen Befestigungs- bzw. Dichtarbeiten im Inneren des Förderrohrs vorzunehmen sind. Es genügt, das erfindungsgemäße Innengehäuse vom Rohrende in das Förderrohr einzuschieben.

Die Erfindung wird nachfolgend unter Bezugnahme auf die beigefügte Zeichnung erläutert, in der ein vorteilhaftes Ausführungsbeispiel dargestellt ist. Es zeigen:
- Fig. 1: eine Querschnittsdarstellung eines ersten Ausführungsbeispiels;

- Fig. 2: eine Querschnittsdarstellung eines zweiten Ausführungsbeispiels;
- Fig. 3: eine vergrößerte Teilansicht des mit "X" markierten Bereichs in Fig. 2;
- Fig. 4: einen Längsschnitt durch ein Förderrohr gemäß dem zweiten Ausführungsbeispiel; und
- Fig. 5: ein Einbaubeispiel für eine abschnittsweise Anordnung in einer Steigung.

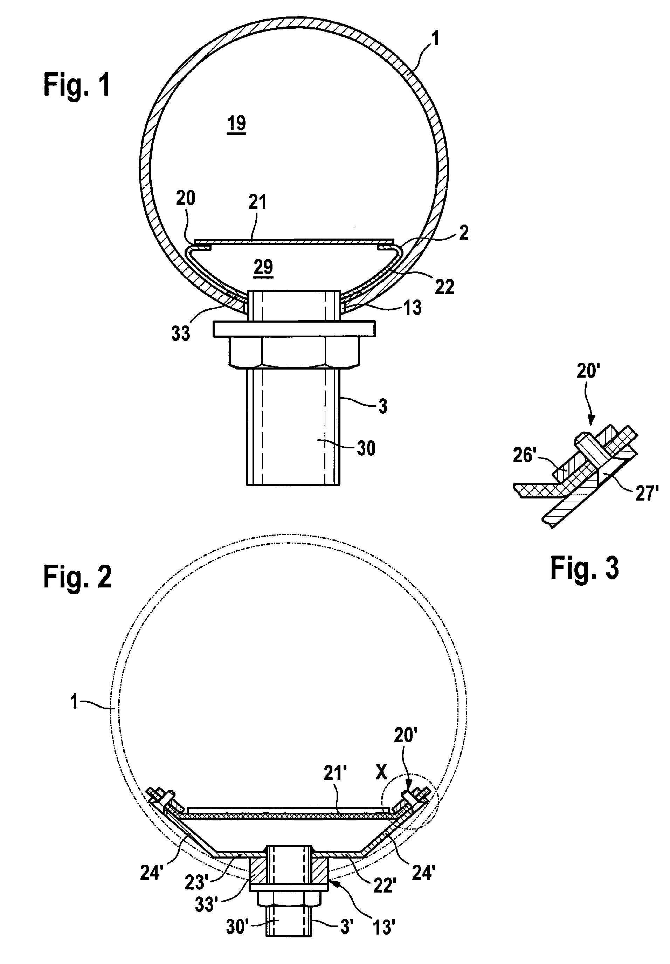

Bei dem in Fig. 1 dargestellten ersten Ausführungsbeispiel handelt es sich um ein pneumatisches Förderrohr gemäß der Erfindung, das bereits bei der Herstellung mit einer Einrichtung zum Fluidisieren versehen wurde. Das pneumatische Förderrohr umfasst ein zylindrisches Rohrgehäuse 1 mit einer Fluidisiereinrichtung, die durch ein Innengehäuse 2 mit einem Anschlussstutzen 3 gebildet ist. Das Innengehäuse 2 besteht im Wesentlichen aus einer Schale 22 und einer Platte 21 als Zwischenboden. Die Platte 21 ist eine Blechplatte, die mit einer Vielzahl von feinen Öffnungen (nicht dargestellt) versehen ist. Die Weite der Öffnungen ist dabei so bemessen, dass ein unerwünschter Durchfall von auf der Platte 21 aufliegendem Schüttgut verhindert ist. Die Schale 22 ist von der generellen Form eines Abschnitts eines Zylindermantels. Sie ist mit ihrer Außenkontur an die Innenwandung des Rohrs 1 angepasst. Die Schale 22 liegt so in dem Unterbereich des Rohrs 1, dass die Platte 21 eine im Schnitt waagerechte Sekante bildet.

Die Schale 22 ist mit dem Boden 21 entlang ihrer Längsseiten (in Achsrichtung des Rohrs 1 gesehen) über eine Schweißverbindung 20 dicht miteinander verbunden. Die Schweißverbindung 20 verbindet allein die Platte 21 mit der Schale 22; eine Verbindung mit dem Rohr 1 ist nicht vorgesehen. Damit ist ein abgeschlossenes Innengehäuse 2 gebildet, das einen Gasraum 29 umschließt. Über den Stutzen 3 wird dem Gasraum Gas, bspw. Druckluft, zugeführt. Der Gasraum 29 steht unter einem Überdruck gegenüber dem Innenraum 19 des Rohrs 1. Auf Grund des Druckunterschieds strömt Gas durch die Öffnungen der Platte 21 aus dem Gasraum 29 in den Förderraum 19. Auf der Platte 21 aufliegendes Schüttgut wird fluidisiert.

Das Innengehäuse 2 mit der Schale 22 und der Platte 21 ist vorzugsweise aus Metallmaterial hergestellt. Die Verwendung von metallischen Materialien ermöglicht höhere Temperaturen bei dem Transport des Schüttguts. Während herkömmlicherweise im Stand der Technik Temperaturen bis zu 150°C erreicht wurden, sind dank der Erfindung bei einer metallischen Ausführung Temperaturen von 200°C bis 400°C ohne Schwierigkeiten ermöglicht.

Zur Zuführung von Gas in den Gasraum 29 ist ein Stutzen 3 vorgesehen. Er besteht im Wesentlichen aus einem Hauptrohr 30, durch welches Druckluft als Druckgas geleitet ist. Das Hauptrohr 30 ist durch eine Öffnung 13 in dem Rohr 1 geführt. Dieses weist eine weite auf, die etwas größer ist als diejenige des Hauptrohrs 30, um einen problemlosen Durchgang zu ermöglichen. Zum Abdichten der Öffnung 13 gegenüber der Umgebung ist eine Dichtung 33 vorgesehen. Diese Dichtung ist als flache Scheibendichtung ausgeführt, die um das innenseitige Ende des Hauptrohrs 30 herum angeordnet und von der Schale 22 gegen die Innenwandung des Rohrs 1 gepresst ist. Zur Verbindung des Hauptrohrs 30 mit der Schale 22 kann eine Schweißnaht oder eine Schraubengewindeverbindung vorgesehen sein. Letztere eignet sich insbesondere zur Nachrüstung oder bei langen Stutzen. Bei kurzen Stutzen ist es auch ermöglicht, die gesamte Anordnung bestehend aus Schale 22 mit Stutzen 3 in das Rohr 1 einzuschieben, bis die Stutzen 3 sich über ihren jeweiligen Öffnungen 13 befinden, und dann das Innengehäuse 2 soweit abzusenken, dass die Stutzen 3 aus der Öffnung 13 austreten.

In Fig. 2 ist ein zweites Ausführungsbeispiel dargestellt. Es unterscheidet sich von dem in Fig. 1 dargestellten im Wesentlichen dadurch, dass anstelle der Platte 21 ein Metallgewebe 21' als Zwischenboden verwendet ist. Ein weiterer Unterschied liegt darin, dass anstelle der an die Innenkontur des Rohrs 1 angepassten Schale 22 ein aus mehreren geraden Platten zusammengesetzter Schalenkörper 22' verwendet ist. Der Schalenkörper 22' umfasst eine Bodenplatte 23', an deren Längsseiten sich zwei winklig nach außen oben erstreckende Seitenplatten 24' anschließen. In ihrem äußeren Abschnitt sind Verbindungselemente 20' vorgesehen, welche den Schalenkörper 22' mit dem als Zwischenboden fungierenden Metallgewebe 21' dichtend verbinden.

Der Aufbau der Verbindung 20' ist in Fig. 3 näher dargestellt. In dem Bereich der Verbindung 20' ist das den Zwischenboden bildende Metallgewebe 21' so abgewinkelt, dass es parallel zu dem äußeren Abschnitt der Seitenplatten 24' läuft. In diesem Bereich sind entlang der Seitenränder Dichtleisten 26' auf das Metallgewebe 21' aufgelegt, und mittels eines Schraubelements 27' als Zugverbindung fest auf das Metallgewebe 21' und den äußeren Bereich der Seitenplatten 24' gepresst. Damit ist das Metallgewebe 21' über den Schalenkörper 22' gespannt. Die Verbindung 20' haltert also das Metallgewebe 21' mechanisch und dichtet es zugleich gegenüber dem Schalenkörper 22' ab. Die Verbindung mittels Schraubelementen 27' oder Nieten (nicht dargestellt) ermöglicht es, den Schalenkörper 22' mit dem Metallgewebe 21' schon außerhalb des Rohrs 1 zu verbinden, und das so vorbereitete innere Gehäuse in das Rohr 1 einzuschieben. Dieses Ausführungsbeispiel eignet sich damit hervorragend für die Nachrüstung.

Zur Zuführung von Druckgas ist wiederum ein Stutzen 3' vorgesehen. Sein Hauptrohr 30' ist über eine Gummimuffe 33' durch eine auf den Außendurchmesser der Gummimuffe 33' abgestimmte Öffnung 13' im Rohr 1 geführt, und endet in einer Durchbrechung in der Bodenplatte 23' des Schalenkörpers 22'. Vorzugsweise ist dazu das Hauptrohr 30' mit der Bodenplatte 23' verschweißt. Dies ermöglicht eine besonders sicher abdichtende Verbindung. Es kann aber auch vorgesehen sein, dass das Rohr 30' über eine entsprechende Gewindeverbindung (nicht dargestellt) in das Bodenblech 23' eingeschraubt ist. Die Muffe 33' dient nicht zur Abdichtung gegenüber dem Druck der Gasversorgung, sondern isoliert den Förderraum 19 von der Umgebung. Auf besondere Gasdichtheit kommt es bei ihr daher regelmäßig nicht an.

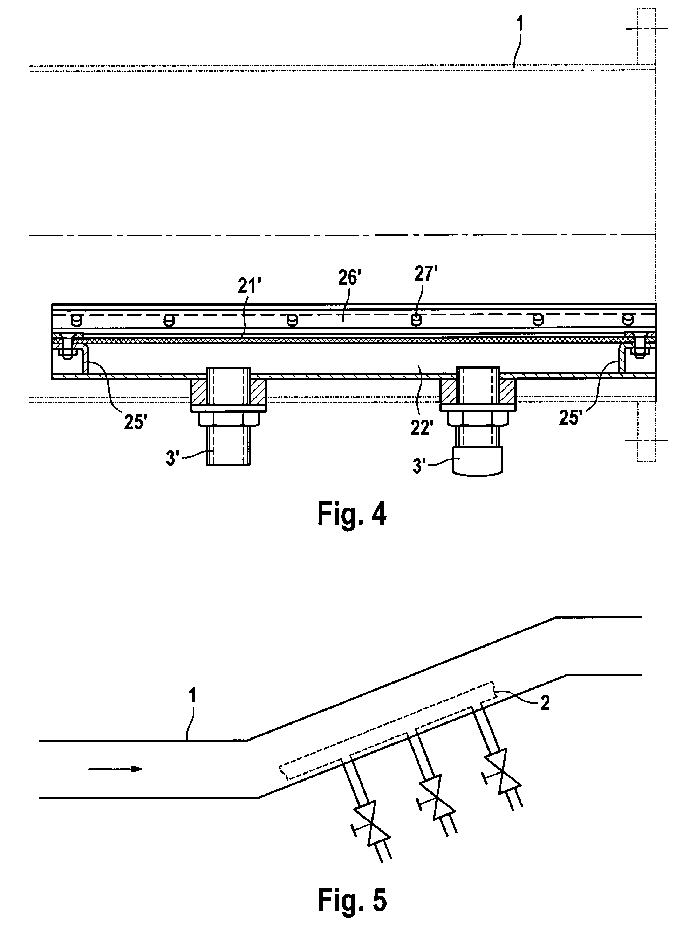

In Fig. 4 ist das in Fig. 2 dargestellte Ausführungsbeispiel in einer Längsansicht dargestellt. Gleichartige Teile sind mit gleichen Bezugsziffern versehen, so dass insoweit hier auf eine Erläuterung verzichtet werden kann. Mit der Bezugsziffer 25' bezeichnet sind Stirnwände des Schalenkörpers 22'. Sie begrenzen den Schalenkörper 22' nach vorne und hinten. Die Verbindung mit dem Metallgewebe 21' erfolgt auf eine Weise entsprechend den Seitenrändern.

Man erkennt, dass sich insbesondere das in der Fig. 2 und 4 dargestellte Ausführungsbeispiel zur Nachrüstung von bestehenden Förderrohren eignet. Es brauchen im Innenraum des Förderrohrs 1 keine Arbeiten vorgenommen zu werden, sondern es genügt, eine Öffnung 13 zur Durchführung der Anschlussstutzen 30' zu schaffen. Das Innengehäuse mit der bereits miteinander dichtend verbundenen Schale 22' und Zwischenboden 21 braucht dann nur von der Seite eingeschoben zu werden, bis die Anschlussstutzen 30' über den jeweiligen Öffnungen 13 sich befinden, und dann in Position abgesenkt zu werden. Die Fixierung erfolgt hierbei über die Anschlussstutzen 30'. Zur Abdichtung dienen vorzugsweise Flachdichtungen an den Anschlussstutzen 30'. Sie brauchen nur noch mit einer Gasquelle (nicht dargestellt) verbunden zu werden, und das herkömmliche pneumatische Förderrohr ist mit dem erfindungsgemäßen Nachrüstsatz zu einem pneumatischen Förderrohr mit Fluidisiereinrichtung aufgewertet.

In Fig. 5 ist die Anordnung des inneren Gehäuses in einem längeren Förderrohr 1 dargestellt. Man erkennt, dass es nicht erforderlich ist, ein Innengehäuse 2 zum Fluidisieren entlang der gesamten Strecke anzuordnen. Es genügt, es in einzelnen, in der Regel besonders kritischen Abschnitten anzuordnen. Ein Beispiel hierfür ist in Fig. 5 die dargestellte Steigung. Mit herkömmlichen Mitteln ist diese für das Schüttgut nur schwer zu überwinden. Dank der Erfindung kann das Schüttgut soweit fluidisiert werden, dass es unter der Kraft eines Treibgasstroms (durch einen Pfeil symbolisiert) auch die Steigung überwinden kann.

## Patentansprüche

1. Pneumatisches Förderrohr zum Transportieren von Schüttgut mit einem rohrförmigen Gehäuse (1), das durch einen Zwischenboden (31) in einen oberen Förderraum (19) und einen unteren Gasraum (29) geteilt ist, wobei der Zwischenboden (21, 21') mittels entlang seiner Seitenwände laufende Befestigungselemente abgedichtet ist,
**dadurch gekennzeichnet, dass**
der nach oben durch den Zwischenboden (21) begrenzte Gasraum (29) zur Seite und nach unten hin über eine starre Schale (22, 22') begrenzt ist, mit deren Rändern die Befestigungselemente für den Zwischenboden (21, 21') verbunden sind.

2. Pneumatisches Förderrohr nach Anspruch 1,
**dadurch gekennzeichnet, dass**
der Zwischenboden (21') ein Gewebe ist.

3. Pneumatisches Förderrohr nach Anspruch 2,
**dadurch gekennzeichnet, dass**
der Zwischenboden (21') ein Drahtgewebe, vorzugsweise aus Metall ist.

4. Pneumatisches Förderrohr nach Anspruch 2 oder 3,
**dadurch gekennzeichnet, dass**
an den gegenüberliegenden Rändern eine Spanneinrichtung für das Gewebe vorgesehen ist.

5. Pneumatisches Förderrohr nach Anspruch 4,
**dadurch gekennzeichnet, dass**
Dichtleisten (26') in die Spanneinrichtung integriert sind.

6. Pneumatisches Förderrohr nach einem der vorangehenden Ansprüche,
**dadurch gekennzeichnet, dass**
die Form der Schale (22) komplementär zur Innenkontur des Förderrohrs (1) geformt ist.

7. Pneumatisches Förderrohr nach einem der vorangehenden Ansprüche,
**dadurch gekennzeichnet, dass**
die Schale (22') aus winklig zusammengefügten Bodenblech (23') und Seitenblechen (24') gebildet ist.

8. Pneumatisches Förderrohr nach einem der vorangehenden Ansprüche,
**dadurch gekennzeichnet, dass**
an einer dem Zwischenboden (21, 21') gegenüberliegenden Seite der Schale (22, 22') ein Stutzen (3, 3') zur Druckgaszufuhr angeordnet ist, der über eine Öffnung (13, 13') im Förderrohr (1) nach außen geführt ist.

9. Pneumatisches Förderrohr nach Anspruch 8,
**dadurch gekennzeichnet, dass**
auf dem Stutzen (3) ein elastisches Element (33') aufgesetzt ist, dessen Außenabmessungen auf die Weite der Öffnung (13') abgestimmt ist.

10. Nachrüstsatz für pneumatische Förderrohre zum Transportieren von Schüttgut mit einem Innengehäuse (2) zum Einbringen in ein rohrförmiges Gehäuse (1) des Förderrohrs, das durch einen Zwischenboden (21, 21') in einen oberen Förderraum (19) und einen unteren Gasraum (29) geteilt ist,
**dadurch gekennzeichnet, dass**
das Innengehäuse (2) als eine starre Schale (22, 22') ausgebildet ist, die nach oben hin durch den Zwischenboden (21, 21') bedeckt ist, der über Befestigungselemente mit Rändern der starren Schale (22, 22') verbunden ist.

11. Nachrüstsatz nach Anspruch 10,
**dadurch gekennzeichnet, dass**
er nach einem der Ansprüche 2 bis 9 weitergebildet ist.
